Europäisches Patentamt

**European Patent Office**

Office européen des brevets

(19)

(11) Publication number: **0 029 417**
A2

## EUROPEAN PATENT APPLICATION

(21) Application number: **80830093.3**

(22) Date of filing: **04.11.80**

(51) Int. Cl.³: **F 24 J 3/02**

(30) Priority: **19.11.79 IT 2739379**

(43) Date of publication of application: **27.05.81**
**Bulletin 81/21**

(84) Designated Contracting States: **CH FR GB LI SE**

(71) Applicant: **Ciccotelli, Luciano, Via San Gottardo, 56, Monza (Milan) (IT)**
Applicant: **Vrespa, Giuseppe, Via Pisacane, 16, Milan (IT)**

(72) Inventor: **Ciccotelli, Luciano, Via San Gottardo, 56, Monza (Milan) (IT)**
Inventor: **Vrespa, Giuseppe, Via Pisacane, 16, Milan (IT)**

(74) Representative: **Calvani, Domenico, UFFICIO BREVETTI ING. CALVANI, SALVI & VERONELLI 4, Piazza Duca d'Aosta, I-20124 Milan (IT)**

(54) A thermic energy collector and distributor apparatus preferably using sun radiations.

(57) A thermic energy collector-distributor apparatus including at least one enbloc preferably in a synthetic plastic material which shows or cooperates with canalizations for the primary fluid heated up by the incident energy.

ACTORUM AG

- 1 -

0029417

This invention concerns a thermic energy collector-distributor apparatus preferably of the type employing sun radiations.

It is known that the exploitment of the radiations incident on the earth surface, namely sun radiations, is a theme of great actuality, specially after the energetic crisis and the natural decrease of the combustible supplies such as fuel, natural gases and so on, with consequent increase in the thermoelectric energy production costs. Such exploitment is also profitable since no appreciable atmospheric pollutions are formed.

In the filed of thermic energy production from sun radiations, particular attention has been payed to the problems concerned with "sun panels", specially with reference to the structure of said panels in order to obtain the best yield therefrom.

In spite of numerous known structures of sun panels difficulties subsist in what concerns the panel construction, the realization of pipes for primary liquid, and outer pipes, for instance of the exchanger or the like, as well as the thermic yield and therefore the cost of panels and related plants.

An object of this invention is to avoid the cited and other drawbacks of the known constructions.

Accordingly, it relates to an apparatus adapted to exploit incident radiations in particular sun radiations on the earth surface in order to produce thermic energy, said apparatus comprising at least one energy collector-distributor which is in the form of an enblock, preferably in synthetic black plastic material, as obtained by a single forming operation, during which both the collector-distributor external covers and body are fabricated, such body showing at least one surface wherein open channels with suitable paths and developments are formed to convey the primary fluid heated up by the incident energy, said surface being covered by at least one covering element transparent to radiations, such as a glass or the like which closes the cross sections of said channels; said channels being connected into a circuit wherein said primary fluid is circulated and which includes a heat exchanger.

The abovestated invention can be applied to different embodiments, with different materials forming said enbloc, with different circuits and with different apparatus structures and components.

For instance, without departing from the scope of the invention said channels, instead of being directly obtained on the enbloc surface, could be shown by transparent cover or covers fixed to the above mentioned surface, which in this case would be plane.

In addition, said enbloc and therefore said body showing the above mentioned channels is made of foamed polyurethane, which is casted in a suitable mold and has such a formulation to directly form, after solidification, a high density and strong outer layer as well as a low density and high cohibent inner body.

According to a preferred embodiment, said transparent elements are at least two, one of which is directly fixed to the channelled surface of the enbloc by means of suitable adhesives for example a siliconic adhesive, while the other transparent element is fixed to the first one, after interposition of spacers or the like in order to obtain an air space and then a so called "green house effect" for increasing the primary fluid thermic content and then obtaining a channel complementary thermal insulation to minimize the thermal dispersions and therefore increase the apparatus yield.

According to a preferred embodiment, the primary fluid circuit is made at least in part by tubes of synthetic plastic material, for example foamed polyurethane with different expansion rates so that the cross section thereof shows a main intermediate zone of low density and then high insulation synthetic plastic material, as well as inner and outer zones of high density and

- 3 -

0029417

strength synthetic plastic material, the plastic material used being of so called "self-skinning", type such that of the enloc.

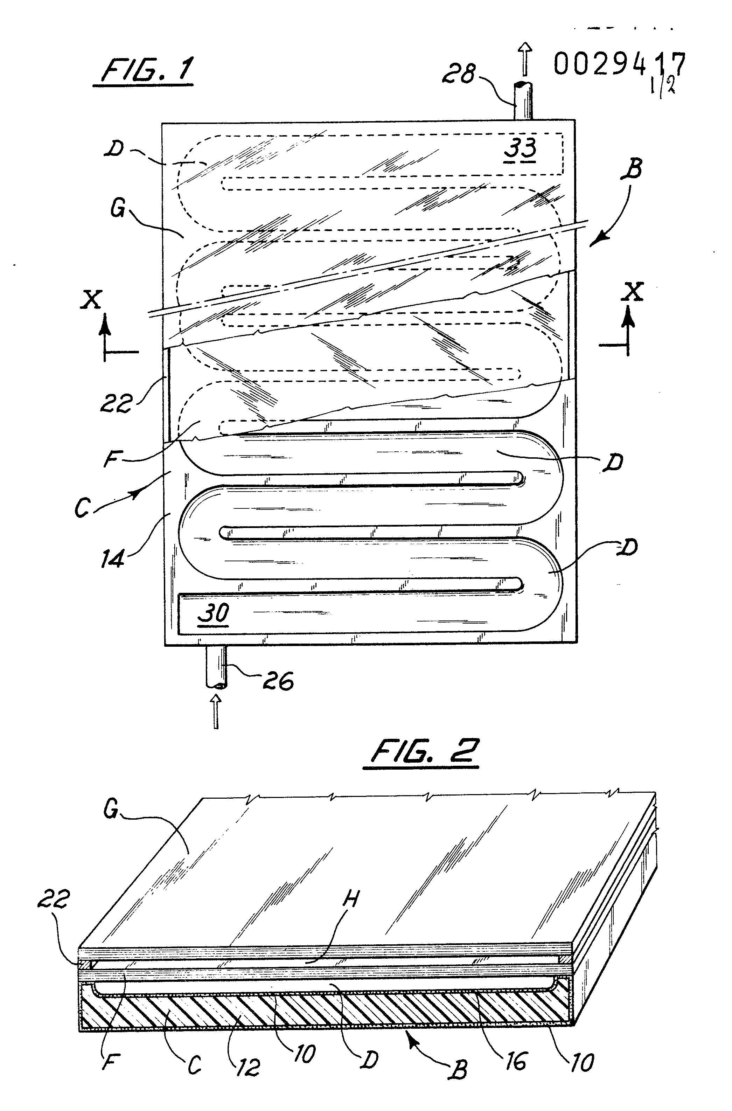

Fig.1 is a partial and diagrammatic plan view of a collector-distributor according to this invention.

Fig.2 is a diagrammatic partial cross-section according to the line X-X of fig.1.

Fig.3 is a cross-section on a larger scale of a pipe forming the primary fluid conveying circuit.

Fig.4 is a diagrammatic view of the main apparatus components in a circuit with a related boiler for the exploitment of the thermic energy.

With reference to the drawings the apparatus of this invention comprises, as main component, a collector-distributor device B which in this case can be defined as a "sun panel" because it exploits the incident sun radiations on the apparatus. Of course if the shown device is used for exploitment of any other kind of radiant energy, the term "sun panel" could not be applied, but the device B would anyhow be able to perfectly operate as it has already been shown and as it will be more particularly described later on.

Said collector-distributor B is formed by an enbloc C which is suitably sized in function of both the apparatus capacity and the required mechanical strength thereof, said enbloc preferably having the shape of a solid paralelepipedon.

Even if said collector-distributor can be made of any suitable material, in order to obtain the desired thermal absorption and insulation features, as well as a perfect transmission of the incident radiations to the primary fluid, said collector-distributor is preferably made of a black plastic material in an enbloc formed in one moulding operation during which both the external linings 10 and body 12 thereof are obtained.

Said body 12 shows in this case one surface only, namely the upper rectangular surface 14 provided with channels D with a suitable path and in particular with one coiled channel having such a length and development to maximize the primary fluid surface on which the energy to be exploited incides.

Preferably, said channels D, as shown by the member C at the end of the enbloc formation phase are opened as they have a bottom surface 16 and side surfaces formed by the above mentioned outer linings but they dont show an upper surface so that the channel cross-section is indefinite and open.

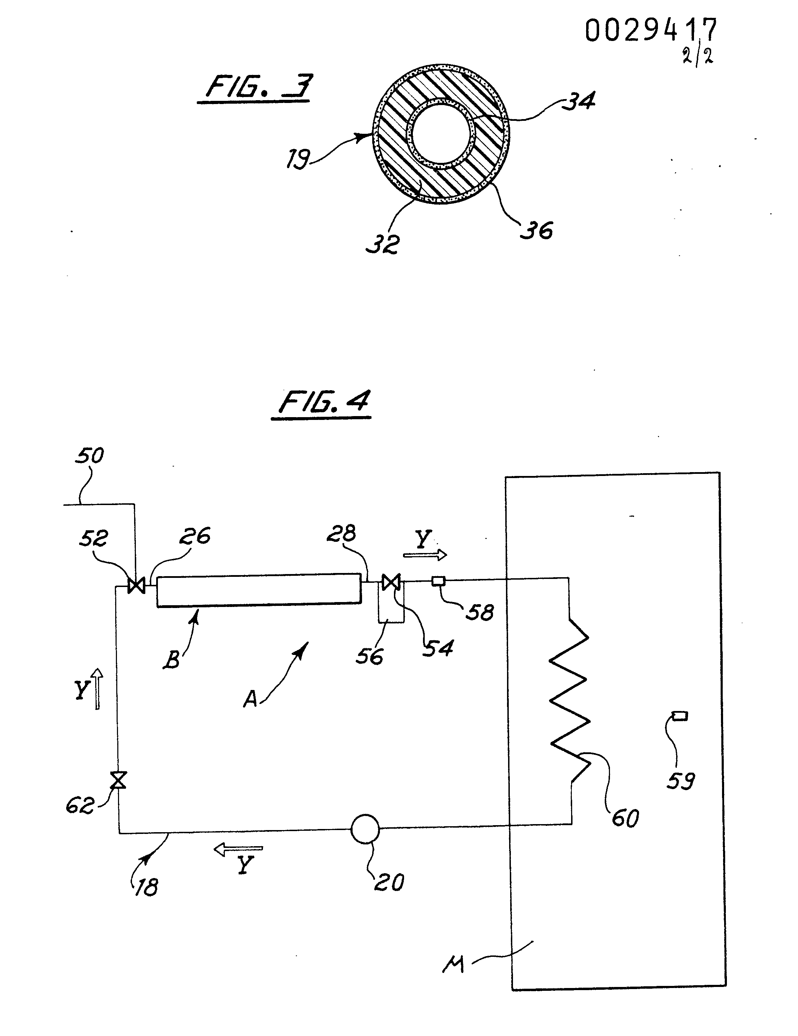

As already said, once the collector-distributor device B is mounted, channels D are adapted to convey the primary fluid heated-up by the incident energy in such way that such fluid can run through a primary circuit 18, in the direction of the arrows Y, preferably by means of a pump 20 (fig.4);

The upper surface 14 of enbloc C, is covered by a transparent element F, in this case a glass sheet which is steadily fixed to the above mentioned surface 14 and therefore to the enbloc C by means of suitable adhesives, for example silicone based adhesives. It's obvious that once the sheet F is fixed on the surface 14, parallely to the same, the channel D becomes completely definite and the cross-section thereof is now closed, since the upper side is made by a glass sheet portion.

Upon the first sheet F a second sheet G is placed, preferably in the same material of sheet F and parallel thereto; a spacer element 22 has been previously put between sheets F and G in order to obtain a perimetral air-tight closure and constitute a suitably sized free space H between the sheets, to produce a so called "greenhouse effect" and increase the thermic value of the primary fluid in channel D as well as obtain a complementary thermic insulation of the channels so to minimize the energetic dispersions and therefore increase the apparatus overall production.

In order to bond the sheets G and F suitable adhesives will be used, eventually the same used to bond the sheet F to said surface 14.

The references 26-28 show fittings at the ends 30-33 of channel D, for connection to the primary fluid conveying circuit 18, such circuit comprising at least in part conveying pipes of synthetic plastic material, namely foamed polyurethane with different foaming rates. As it can be seen from fig.3 the cross section of pipes 19 forming said circuit 18 has an intermediate main zone 32 of low density and therefore high insulation synthetic plastic material, and at least one inner zone 34 and an outer zone 36 in a high density and therefore high strength plastic material. The plastic material used for the formation of pipes 19 is obtained from one formulation, and is of the "self-skinning" type as that of enbloc C. This plastic material can be foaming polyurethane at high density for the outer surfaces and at low density for the inner zones.

In order to obtain said enbloc C from foaming polyurethane, the polyurethane is molded with such a formulation to automatically and directly form, when solidified, said high density exterior linings 10 and said low density core.

With reference to figure 4 the apparatus A (which comprises all elements as necessary for operating sun panel B in order to produce and distribute thermic energy) is shown in combination with an energy exploiting apparatus M for example in the form of a boiler delivering hot water for domestic use.

Assuming that the direction of the primary fluid flow within the circuit is shown by arrows Y, the reference 50 indicates a primary fluid feeding pipe, in this case a water pipe from the water network,which feeds water to device B through a valve 52, upstream said inlet pipe-fitting 26. A security valve 54 is able to operate in connection with an expansion tank 56, while a thermosensible element 58 controls the operation of pump 20 and therefore

0029417

the fluid flow in circuit 18, in function of the thermic differential between the primary and secondary fluids, into panel B and respectively boiler M.

An heat exchanger 60 is enclosed in said circuit 18, as well as a draining valve 62 for discharging wastes and emptying the primary fluid when necessary. A second thermosensible element 59 is located in boiler M and together with element 58, determinates said thermal differential between the primary fluid and secondary fluid temperatures in order to control the flow of primary fluid in apparatus A.

In operation, said collector distributor device B produces thermal energy as a result of the presence of incident radiations, for example sun radiations having wavelengths greater than 0,76 microns or infrared radiations, which heat up the primary fluid in channels D and therefore in the circuit 18. The storedup heat is communicated, by means of heat exchanger 60, to the colder secondary fluid, for domestic or industrial uses, for instance the production of hot water for domestic use.

The surface 14 of enbloc C is suitably exposed to sun rays in such a way that they perpendicularly hit such surface while pipes 19 of circuit 18 are suitably thermally insulated in order to increase the system efficiency. Said system may include safety valves to avoid dangerous and harmful overpressures in case of over-heating.

Actual uses of the shown apparatus, comprise: water heating for sanitary domestic use; water heating for sanitary livestock growing; water heating for sport's plants such as swimming-pools or the like; water heating for ichthyic plants; heating for fixed or mobile private or public living unities; heating of industrial plants, transport systems; house conditioning using stored up heat in order to activate expansion refrigerating plants, heating of gases for drying powdered or granulated materials.

0029417

The primary fluid must circulate in the apparatus A so that to have the longest possible path, with a regular and even flow. The black colour of enbloc has been chosen both in order to absorb a higher radiation quantity and in order to offer a higher resistance to ageing caused by ultraviolet radiations.

While the cited enbloc can be produced in any kind of non conductive and waterproof material, for tecnical and economic reasons synthetic expandable plastic materials with a predominance of closed cells are to be preferred, said materials allowing to obtain during the processing phase, compact and smooth superficial layers.

To this end, formulations of polyurethanes which have been expanded at densities preferably between 0,3 and 0,4 $Kg/dm^3$, using organic chlorine-fluorine compounds are preferred. These formulations can be molded into moulds, the surface of which has been previously sprayed in an uniform way with black coloured polyurethane for example polyurethane with 12% of carbon black, in order to form the smooth and compact superficial layer 10.

The depth of channels D is preferably between 1 and 0,6 millimeters.

As to waterproofness of contact zones between the transparent sheets F-G, and between the sheet F and enbloc C, it will be more convenient to use siliconic adhesives.

When devices B with great irradiated surface are used, the superior sheet G could bend due to it's own weight, and then suitable supports of the same sheet material can be foreseen.

The above mentioned sheets can be made of glass or can be obtained by molding or estrusion of polymethylmetacrilate.

In designing the enbloc C and seat to bond sheets FG, the thermal expansion coefficients have to be taken into account, in order to avoid possible breakages or damages due to different thermal deformations. Accordingly the adhesives should be of the not-hardening type as the siliconic adhesives. The circuit 18 must allow a regular and uniform flow of the primary fluid. In the shown embodiment a structure of pipes 18 as illustrated in fig.3 has proved to be advantageous when obtained in a foamed plastic in which the solid outer layer 36 is black in order to avoid heat losses due to irradiation and protect the material from ageing caused by ultraviolet radiations. The intermediate layer 32 is in a foamed material having a density of 0,3-0,4 $Kg/dm^3$. The inner layer is solid and smooth. The insertion of reinforcement materials in the body of pipes 19 can be useful in order to strengthen the same.

Particularly suitable plastic materials for said pipes are: polyolefine; cross linked polyolefines; properly formulated polyurethane resins; ABS copolymers; PVC and it's copolymers; polyolefine copolymers; cross linked polyolefine copolymers.

The primary fluid flow through channels D, pipes 19 of circuit 18 and coils of heat exchanger 60, is ensured by a pump 20 which is controlled by a telerupter activated by the thermosensible elements 58-59, which stop the pump when the temperature of the secondary fluid has reached the maximum excercise level.

The apparatus will also comprise safety valves (for instance valve 54) in order to avoid overpressures. Valve 52 can be automatically operated to feed the primary fluid.

The shown embodiments could be modified without departing from the spirit and scope of this invention.

- 9 -

0029417

CLAIMS.

1. An apparatus for exploitment of incident radiations on the earth's surface, in particular sun radiations, in order to produce thermal energy, and comprising at least a thermal energy collector-distributor,which is made by at least one enbloc in black plastic material, as obtained by one forming operation of outer cover or covers and collector-distributor body, said body having at least one surface with preferably open-air channels for conveying the primary fluid, said surface being covered by at least one element transparent to radiations, as a glass sheet or the like, in order to close the channels and define the cross-section thereof, such channels being connected to a circuit wherein said primary fluid is conveyed and including a heat exchanger with other fluids.

2. An apparatus according to claim 1, wherein said enbloc and in particular said body is made of foaming polyurethane, and is obtained by casting in a mould a polyurethane having such a formulation to define, when solidified, high density and high strength external linings as well as a low density and high insulation body.

3. An apparatus according to claim 1, wherein said transparent elements are at least two, one of which is directly bonded to the enbloc surface carrying said channels, by means of suitable adhesives, as siliconic adhesives or the like, while a second transparent sheet is bonded to the first one to form a free airspace and obtain a so called "green-house effect" increasing the thermal contents of the primary fluid and minimizing thermal dispersions.

0029417

4. An apparatus according to claim 1, wherein the heated up primary fluid is circulated within a circuit at least in part comprising conveying pipes of a synthetic plastic material, as for example polyurethane at different expansion rates, the cross-section of said pipes showing a main intermediate zone of low density synthetic plastic material and at least one outer zone of high density  trength synthetic plastic material, said plastic material being of the same "self-skinning" type of the enbloc material.

5. An apparatus according claim 1, wherein the channels for the primary fluid are obtained either in the transparent sheet or sheets, which are bonded to enbloc plane surfaces.

6. An apparatus according to claim 1, wherein the density of said foaming polyurethane is between 0,3 and  0,4 Kg/dm$^3$.

7.  An enbloc, made by a single body having at least one surface carring one or more channels for flowing a primary fluid to be heated by incident radiations on said enbloc, in the form of a "sun panel", and adapted to be inserted in a thermal energy apparatus according to claim 1.

FIG. 1

0029417
1/2

FIG. 2

_FIG. 3_

19
34
32
36

_FIG. 4_

50
52
26
28
Y
B
A
56
54
58
Y
62
Y
18
20
60
59
M